# EUROPEAN PATENT APPLICATION

(11) **EP 0 593 195 A2**
(43) Date of publication of application: **20.04.1994**
(21) Application number: 93307919.6
(22) Date of filing: 06.10.1993
(51) Int. Cl.: G06F 15/16

(54) **Method and apparatus for communication between equipment units**

(30) Priority: 13.10.1992 JP 300389/92
(71) Applicant: SONY CORPORATION, Tokyo (JP)
(72) Inventor: Tanaka, Shigeo, c/o Sony Corporation, Tokyo (JP)
(74) Representative: Nicholls, Michael John

(57) **Abstract**

A communication method and apparatus simplifying received data processing and eliminating use of high-speed processing equipment. In the first communication apparatus according to this invention, received data of different types are stored in respective buffers, so that the received data need not be read out immediately but may be read only when required, thereby eliminating use of high-speed processing apparatus. Additionally, received data need not be sorted after being read from the buffers, thereby simplifying the processing of the system. In the first communication method according to this invention, if a command and a request are the same in operand, the operand of the request is not sent, thereby reducing an amount of data to be transmitted. In the second communication method according to this invention, communication is always performed in the unlocked state, so that no unlocking instruction is required to change states from locked to unlocked, thereby further reducing an amount of data to be transmitted.

## Description

The present invention relates to an audio-video (AV) system.

It is known that there are two methods for an AV apparatus to receive and process D2B protocol data. In one method, data is processed upon its reception. In the other, received data is held in a receive buffer regardless of data type before being read and processed sequentially.

However, the first method requires a high-speed processing system as well as a high-speed peripheral unit for data to be processed upon its reception.

In the second method, storing received data in the receive buffer is easy to perform, but reading the data from the buffer requires sorting of the data by type, resulting in complicated processing.

Conventionally, it is also a problem that data flows on a D2B bus in a large quantity, occupying the bus for a prolonged time.

Accordingly, it is a first object of the present invention to provide a communication apparatus which eliminates use of a high-speed processing system and complicated processing for manipulating received data.

It is a second object of the present invention to provide a communication method that minimizes a quantity of data to be transmitted.

According to one aspect of the present invention there is provided a method of communication between a plurality of equipment units comprising the steps of: detecting whether a header exists; detecting whether a command exists; detecting whether data exists; and detecting whether a request exists.

According to another aspect of the present invention there is provided a method of communication between a plurality of equipment units comprising the step of: sending a command from a first apparatus to a second apparatus; and returning from said second apparatus to said first apparatus a signal indicating one of acknowledgement and non-acknowledgement of said command without making a request by said first apparatus to said second apparatus.

According to further aspect of the present invention there is provided a method of processing a received signal comprising the steps of: if said received signal is a command, processing said command; and if said received signal is data, sending said data to a display device.

According to still further aspect of the present invention there is provided an apparatus for communication between a plurality of equipment units comprising: an inner bus for connecting a plurality of components of said apparatus; a main controller connected to said inner bus; an outer bus for connecting said apparatus to an external apparatus; a processing unit for communication with said external apparatus; a sub controller connected to said inner bus to control said processing unit; a memory for storing any of a command and data for any of operations including control of said apparatus and communication therewith; and a selector connected to said inner bus to switch between a plurality of information signals.

The invention will be further described by way of example in the following description taken in connection with the accompanying drawings, in which:
Fig. 1 is a block diagram illustrating a constitution of a communication apparatus in one preferred embodiment of the invention;
Fig. 2 is a flowchart describing an example of D2B receive interrupt processing of the embodiment of Fig. 1;
Fig. 3 is a flowchart describing an example of main processing of the embodiment of Fig. 1;
Fig. 4 is a diagram illustrating a packet format of on-screen display (OSD) data of the embodiment of Fig. 1;
Fig. 5 is a diagram illustrating a command data configuration of the embodiment of Fig. 1;
Fig. 6 is a diagram illustrating a request data configuration of the embodiment of Fig. 1;
Fig. 7 is diagram illustrating a send mode of the command and request of the embodiment of Fig. 1;
Fig. 8 is a diagram illustrating a send/receive mode with no request sent;
Fig. 9 is a diagram illustrating an example of standardization of data formats;
Fig. 10 is a diagram illustrating an example of a format in which a command and a request are sent consecutively;
Fig. 11 is a diagram illustrating a format in which a header is sent before a request in one frame to obtain all information necessary for processing in one frame;
Fig. 12 is a diagram illustrating a format in which both an operation code and an operand are sent for a command and an operation code is sent and an operand is not sent for a request;
Fig. 13 is a diagram illustrating an example of connection processing to be performed when a connection command has been issued from an upper-layer apparatus (an AV center 100 for example) to this apparatus (a first VTR 30 for example) in the embodiment of Fig. 1;
Fig. 14 is a diagram illustrating an example of connection processing in a stretching mode in the embodiment of Fig. 1;
Fig. 15 is a diagram illustrating an example of connection processing to be performed when a connection command has been issued from this apparatus (the first VTR 30 for example) to a lower-layer apparatus (a second VTR 40 for example) in the embodiment of Fig. 1;
Fig. 16 is a flowchart describing processing to be performed when this apparatus (the first VTR 30, the second VTR 40 or a LDP 50 for example) connected to the AV center via a D2B bus 21 receives a connection command in the embodiment of Fig. 1;
Fig. 17 is a flowchart describing an example of processing of an internal connection command shown in Fig. 16;
Fig. 18 is a flowchart describing an example of processing of an external connection command shown in Fig. 16;
Fig. 19 is a diagram illustrating a first example of presetting a form of connection from an external plug of a television receiver (the AV center);
Fig. 20 is a diagram illustrating a connection form of the TV to the VTR1, the VTR2 and the LDP1 in preset connection form of Fig. 19;
Fig. 21 is a diagram illustrating a second example of presetting the form of connection from the external plug of the television receiver (AV center);
Fig. 22 is a diagram illustrating a connection form of the TV to the VTR1, the VTR2 and the LDP1 in the preset connection of Fig. 21;
Fig. 23 is a diagram illustrating a third example of presetting the form of connection from the external plug of the television receiver (AV center);

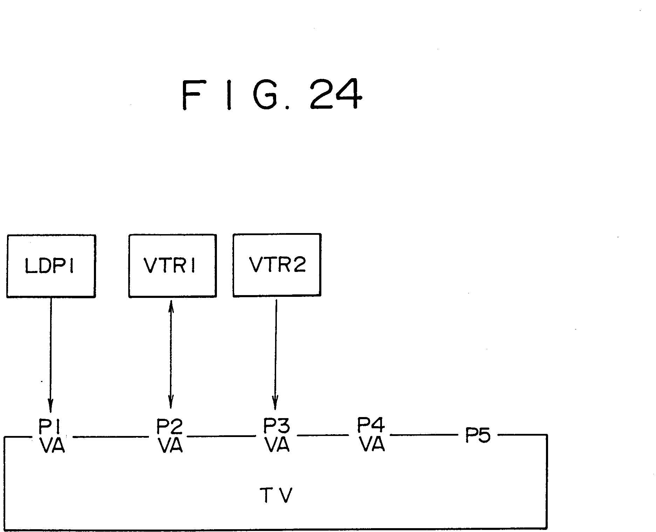

Fig. 24 is a diagram illustrating a connection form of the TV to the VTR1, the VTR2 and the LDP1 of Fig. 23;
Fig. 25 is a diagram illustrating a fourth example of presetting the form of connection from the external plug of the television receiver (AV center);
Fig. 26 is a diagram illustrating a connection form of the TV to the VTR1, the VTR2 and the LDP1 of Fig. 25;
Fig. 27 is a diagram illustrating main types of control bits (CB) of the conventional D2B protocol;
Fig. 28 is a diagram illustrating a message format of the conventional D2B protocol;
Fig. 29 is a diagram illustrating a transfer sequence associated with an OSD command of the conventional D2B protocol;

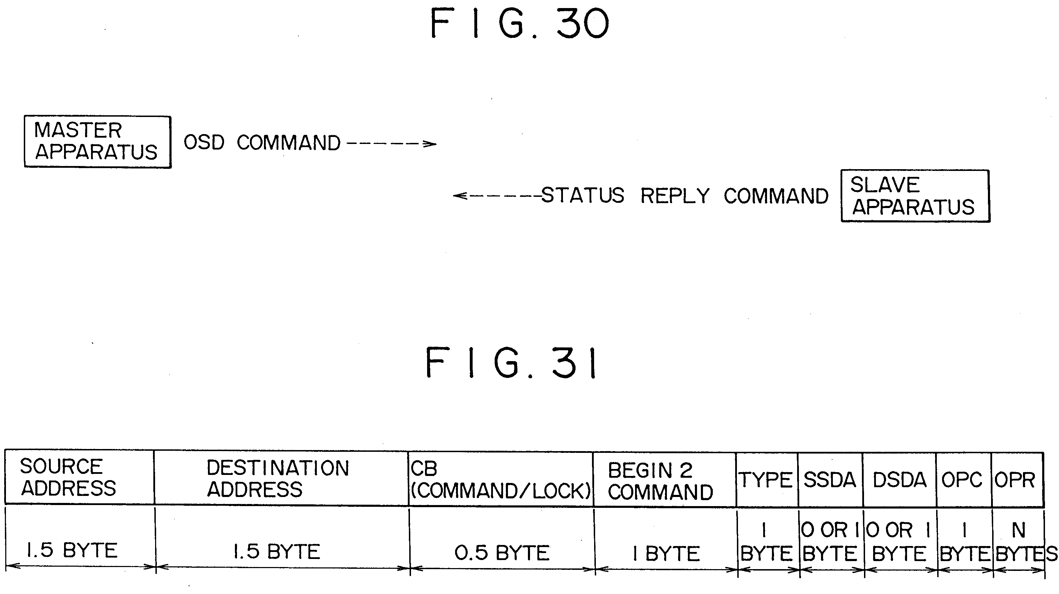

Fig. 30 is a diagram illustrating an example of an OSD command sequence for a communication method according to the invention;
Fig. 31 is a diagram illustrating a transmission format for a routing control command (BEGIN2 CMD = BDH) of the conventional D2B protocol;
Fig. 32 is a diagram illustrating an example of a format of a command system according to the invention;
Fig. 33 is a diagram illustrating an example of connection between a plug of a selector of the AV center and a plug of a VTR;
Fig. 34 is a diagram illustrating an example of a command according to the invention for connecting a plug 2 of the AV center to a plug 1 of the VTR shown in Fig. 33;
Fig. 35 is a flowchart describing received data processing according to the conventional D2B protocol; and
Fig. 36 is a flowchart describing an example of received data processing to be performed when a simplified command system according to the invention is used.

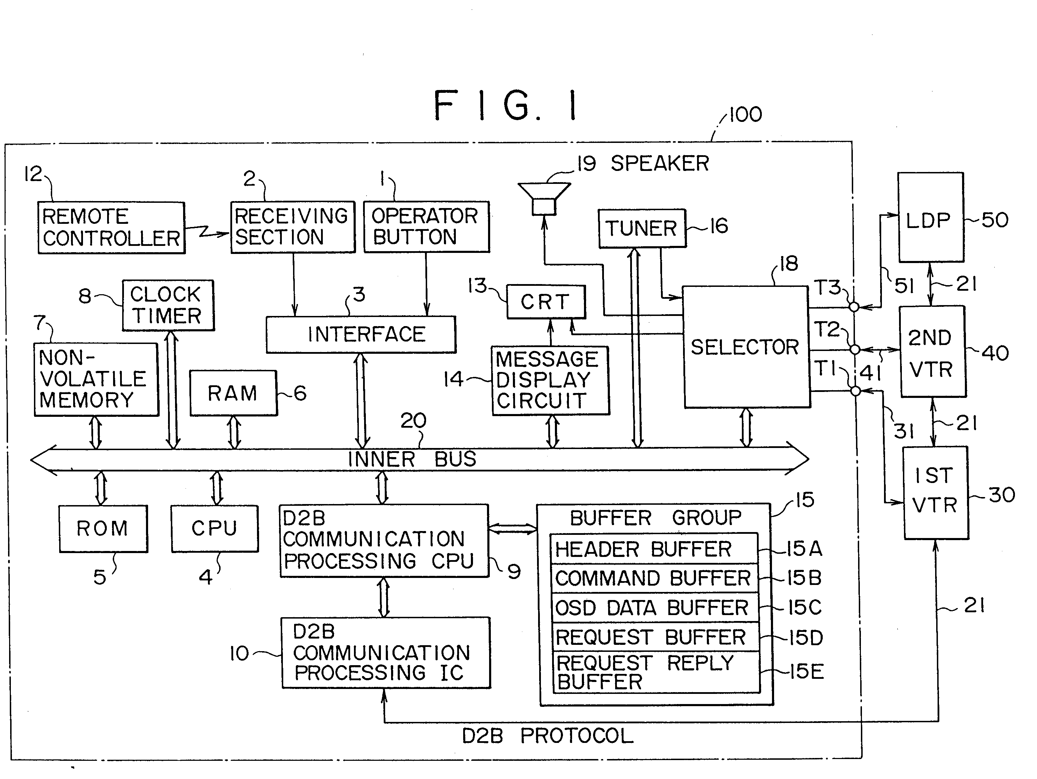

Fig. 1 is a constitution of a preferred embodiment of a communication apparatus according to this invention. This embodiment is an application of the invention to an audio-video system. When an operator button is operated, a predetermined command is entered in a central processing unit (CPU) 4 via an interface 3. When a remote controller 12 is operated, an infrared radiation is emitted from the remote controller 12 to be received by a receiving section 2. As a result, the predetermined command is entered in the CPU 4 via the interface 3.

The CPU 4 processes the entered command to output a channel select command to a tuner 16 and a command to a D2B communication processing CPU 9 which will be described, via an inner bus 20. A read-only memory (ROM) 5 stores a program which is necessary for the CPU 4 to operate. A random access memory (RAM) 6 stores data obtained by data processing by the CPU 4. A non-volatile memory 7 stores data which need be stored after the apparatus is powered off. The data include a state of connection with other audio-video equipment units such as a first video tape recorder (VTR) 30, a second VTR 40, and a laser disc player (LDP) 50. The clock timer 8 always performs a clock counting operation to generate time information.

The CPU 4, the ROM 5, the RAM 6, and the clock timer 8 constitute a main microcomputer for a television receiver.

The D2B communication processing CPU 9 is connected to the CPU 4 via the inner bus 20 as well as to audio-video equipment such as the first VTR 20, the second VTR 40 and the LDP 50 in series via a D2B communication processing integrated circuit IC 10 and a D2B bus, or a D2B control line 21 for data and command transfer. It should be noted that the D2B communication processing CPU 9 has a ROM and a RAM, not shown.

The CPU 9 is connected to a buffer group 15 to store received data in a corresponding buffer. That is, the CPU 9 stores a header (including route information on destination and source) into a header buffer 15A, a command into a command buffer 15B, data into an on-screen-display (OSD) data buffer 15C, and a request into a request buffer 15D. In addition, the CPU 9 stores a reply to the request into a request reply buffer 15E. It should be noted that the buffer group 15 also provides the RAM of the CPU 9.

The first VTR 30 is connected to a terminal T1 of a selector 18 via an AV signal line 31 to transfer a video signal and an audio signal with the selector 18. The second VTR 40 is connected to a terminal T2 of the selector 18 to transfer the signals with it. The LDP 50 is connected to a terminal T3 of the selector 18 to transfer the signals with it.

The video and audio signals output from the selector 18 are selected by the CPU 6 or CPU 9.

A cathode ray tube (CRT) 13 displays an image produced by the video signal coming from the selector 18. A message display circuit 14 displays the OSD data coming from the CPU 9 via the inner bus 20 onto a predetermined area of the CRT 13 as a message. The audio signal coming from the selector 18 is reproduced through a speaker 19.

The operator button 1, the receiving section 2, the interface 3, the CPU 4, the ROM 5, the RAM 6, the non-volatile memory 7, the clock timer 8, the D2B communication processing CPU 9, the D2B communication processing IC 10, the CRT 13, the message display circuit 14, the tuner 16, selector 18, and the speaker 19 shown in Fig. 1 constitute an audio-video (AV) center, or a television receiver 100.

The first VTR 30, the second VTR 40, and the LDP 50 each have a D2B communication processing CPU and a buffer group corresponding to the D2B communication processing CPU 9 and the buffer group 15 of the audio-video center 100 to transfer a header, a command, a request, and OSD data via the D2B control line 21.

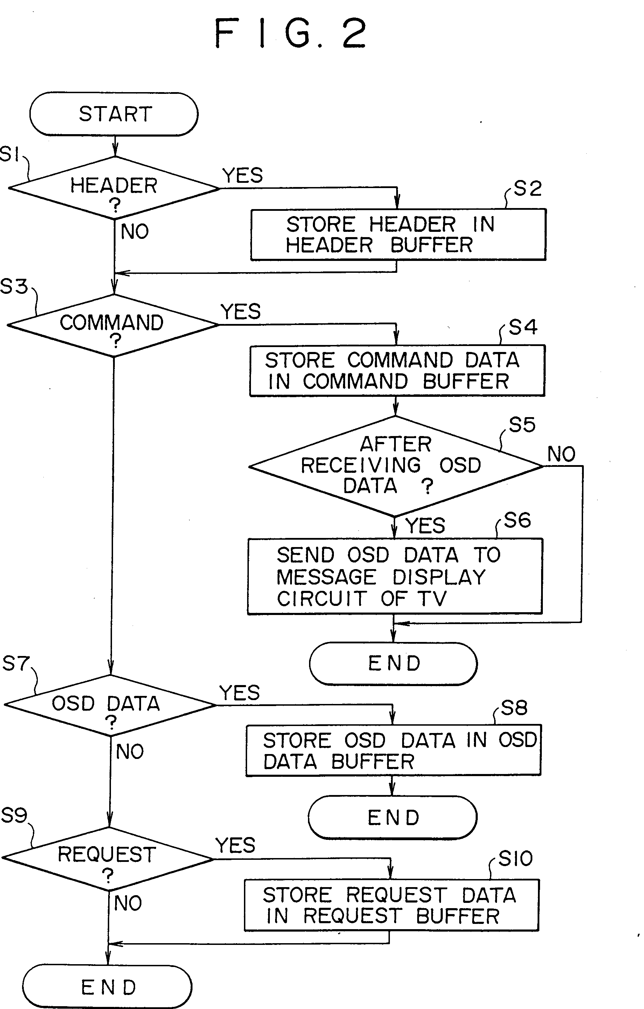

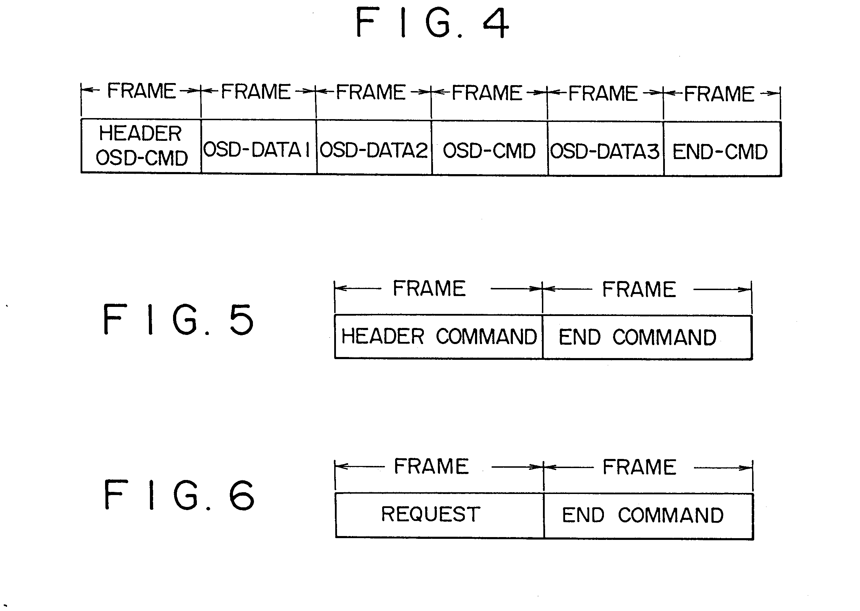

Fig. 2 shows an example of D2B receive interrupt handling in the embodiment of Fig. 1. Fig. 4 shows a packet format of the OSD data of the embodiment of Fig. 1. Fig. 5 shows a command data configuration of the embodiment of Fig. 1. Fig. 6 shows a request data configuration of the embodiment of Fig. 1. As shown in Fig. 4, a first frame, a second frame, a third frame, a fourth frame, a fifth frame, and sixth frame transmit a header, an OSD command, an OSD data 1, an OSD data 2, an OSD command, an OSD data 3, and an end command, respectively. Each of the frames is up to 32 bytes long. It should be noted that, as shown in Fig. 6, the request frame contains no header. The header is located in a preceding command frame associated with the request. The D2B communication processing CPU 9 checks a control bit of a received data packet to see whether received data is a header, a command, a request or OSD data.

If the received data is a header (YES of step S1 of Fig. 2), the CPU 9 stores the received data into header buffer 15A (step S2). If the received data is a command, the CPU 9 stores the received data into the command buffer 15B (step S4). If this command has arrived after receiving OSD data (YES of step S5), the CPU 9 reads the OSD data stored in the OSD data buffer 15C and transfers the data to the message display circuit 14 (step S6). The message display circuit 14 displays the received OSD data in the predetermined area of the CRT 13 as a message.

If the received data is OSD data (YES of step S7), the D2B communication processing CPU 9 stores the received data into the OSD data buffer 15C. If the received data is a request (YES of step S9), the CPU 9 stores the received data into the request buffer 15D (step S10).

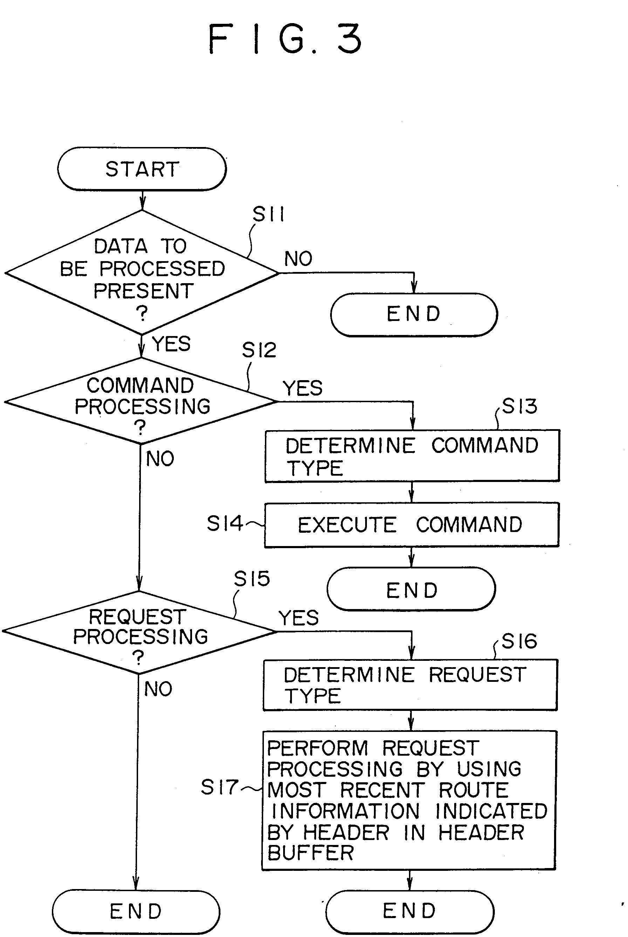

Fig. 3 shows an example of main processing of the embodiment of Fig. 1. First, the CPU 9 checks for data to be processed (step S11) and, if the data to be processed is found, determines whether the processing is command processing or request processing (steps S12 and S15). If the processing is command processing, the CPU 9 reads a command from the command buffer 15B and takes out an operation code (OPC) or an instruction and an operand (OPR) or information supplementing the instruction that constitute the command to determine the operation code (step S13). Based on the operation code determined, the CPU 9 executes an operation code processing routine (step S14). In the case of an OSD command, the CPU 9 executes the command in a frame to be received following an OSD data frame.

If the processing is request processing (YES of step S15), the CPU 9 fetches an operation code of request from the request buffer 15D and determines the operation code (step S16). Based on the operation code determined, the CPU 9 performs the operation code processing for the request by using route information (indicating which sub device is to be controlled by the command) of a header stored in the header buffer 15A (step S17).

Thus, received data are stored in separate buffers according to data types, simplifying a routine for processing each type of data. This will result in a simplified program and a shortened programming time.

It should be noted that most recent header information (for request processing), a command, a request, and OSD data are separately processed in the embodiment of Fig. 1 and the processing of Figs. 2 and 3; as for an OSD command, however, its header, command and data may be stored all in one buffer for processing.

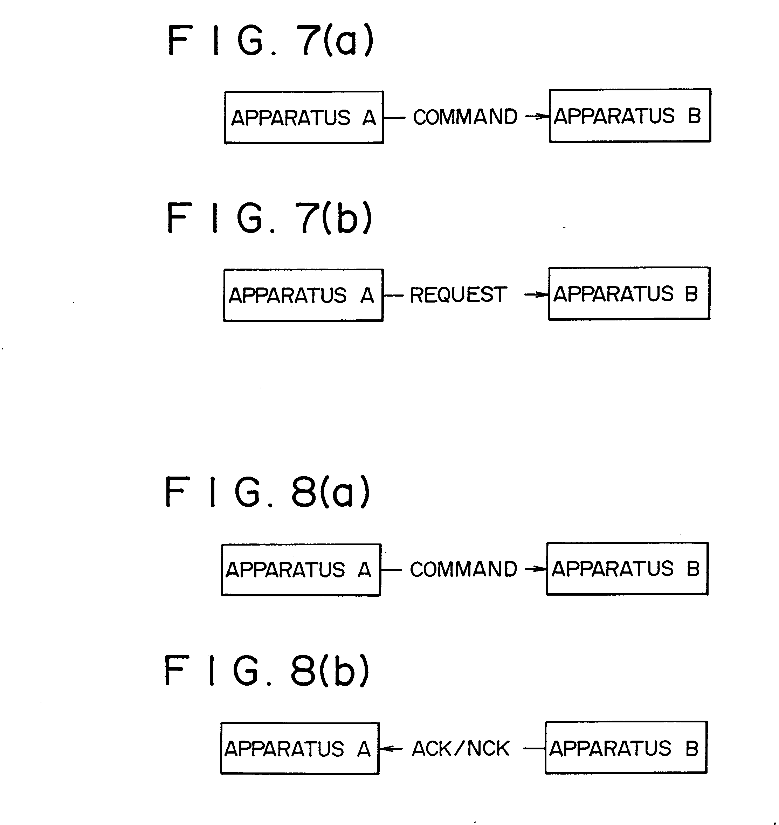

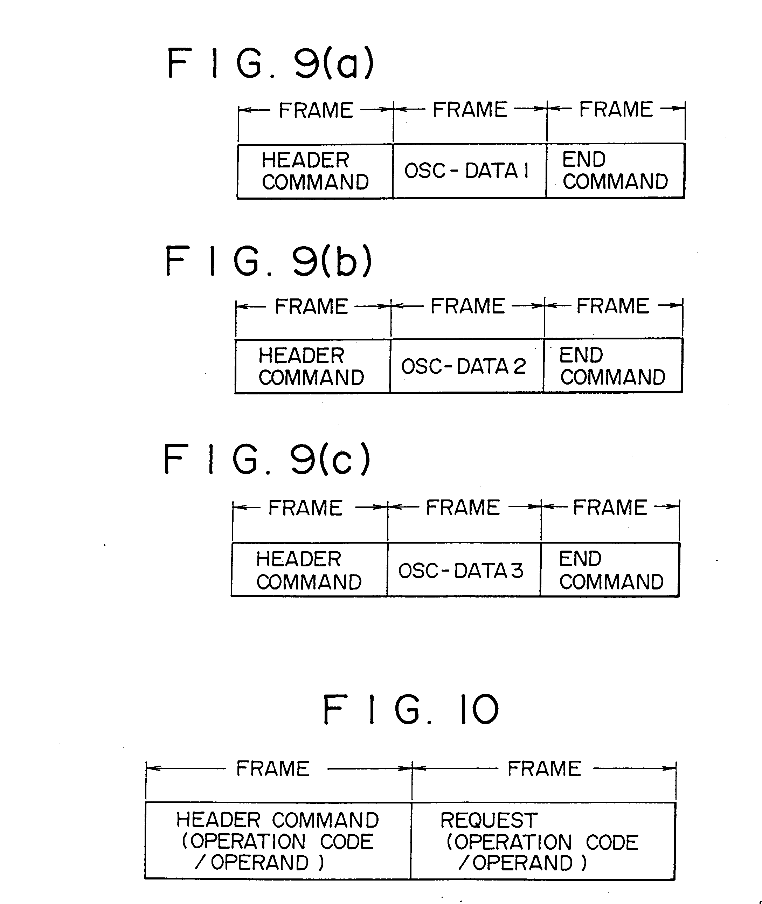

In the embodiment of Fig. 1 and the processing of Fig. 2, both a command and a request are sent from an apparatus A or the AV center 100 to an apparatus B or the first VTR 30 as shown in Fig. 7 for example; however, the apparatus A may send only the command to the apparatus B as shown in Fig. 8. When only the command is sent, a reply from apparatus B is not read by the apparatus A but is sent by the apparatus B to the apparatus A as a reply command. This makes it unnecessary for the apparatus A to perform request processing for the apparatus B. Also, if the apparatus is made return the reply command to the apparatus A upon termination of the processing, a time restriction of processing internal to the apparatus B is eased to allow a CPU to operate at a low speed, eventually resulting in cost saving.In the embodiment of Fig. 1, a flexible data format shown in Fig. 4 is used. However, it is possible to standardize data formats so that, as shown in Fig. 9 (a), the header and command are sent in the first frame, the OSD data 1 in the second frame, and the end command in the third frame as shown in Fig. 9 (a); the header and command are sent in the first frame, the OSD data 2 in the second frame, and the end command in the third frame as shown in Fig. 9 (b); and the header and command are sent in the first frame, the OSD data 3 in the second frame, and the end command in the third frame as shown in Fig. 9 (c).

The above-mentioned standardization reduces a program size and a buffer capacity of a receiving software program of the D2B communication processing CPU to a large extent. This contributes to cost saving and, because specifications of the software are simplified, shortens a system software development time.

In the embodiment of Fig. 1, a maximum length of one frame is 32 bytes. However, the maximum length may set to 16 bytes to reduce the number of buffers to be used by the receiving software, resulting in cost saving.

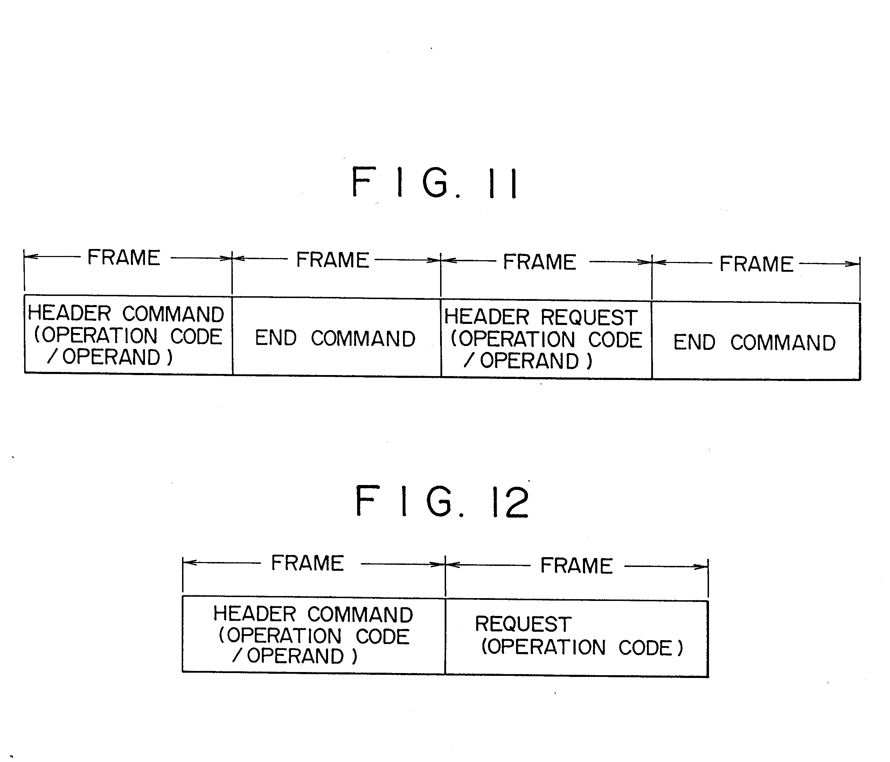

In the embodiment of Fig. 1, the request is not preceded by a header as shown in Fig. 6, so that header information (header information in the preceding frame in Fig. 10) in a preceding command in the received data is used retroactively, making a program relatively complicated. This can be improved by sending a header in the request frame as shown in Fig. 11.

In an example of Fig. 10, the operation code and the operand are sent for both the command and the request. It is also checked whether the operand sent by the request is the same as the operand sent by the command. It may also be constituted so that the operands are the same and, as shown in Fig. 12, the command sends both the operation code and the operand and the request sends only the operation code. This constitution allows to decrease the amount of data to be transmitted and prevent a bus congestion from occurring. If the command is sent not before but after the request, the operand of the request may be omitted to further decrease the amount of data to be transmitted.

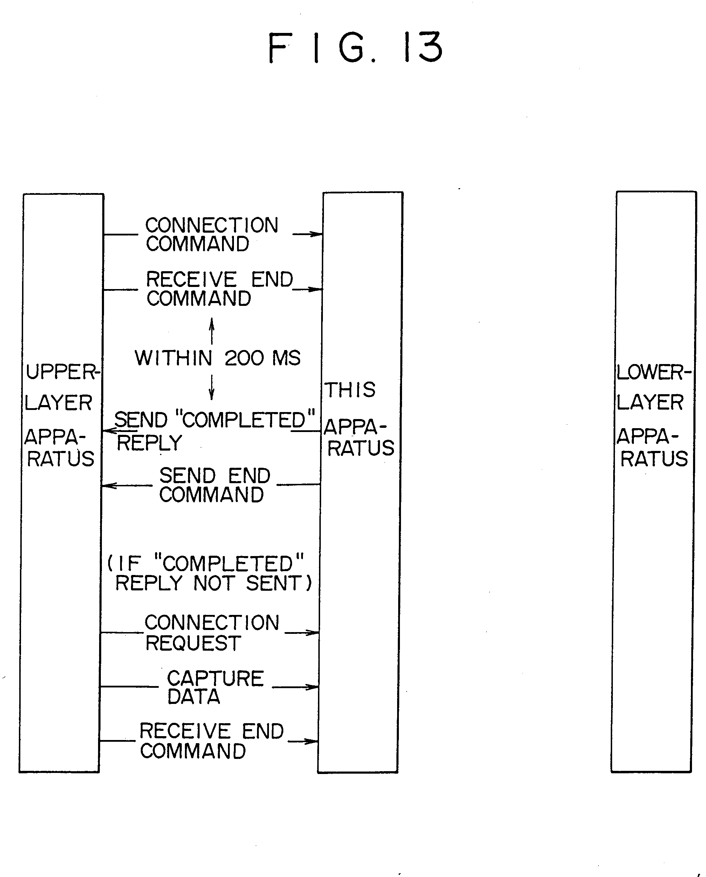

Fig. 13 shows an example of connection processing to be performed when, in the embodiment of Fig. 1, a connection command has been issued from an upper-layer apparatus (the AV center 100 for example) to this apparatus (the first VTR 30 for example). After receiving a connection command and then an end command from the upper-layer apparatus (the AV center 100 for example), this apparatus (the first VTR 30 for example) sends back a "completed" reply indicating that the connection has been completed and an end command generally within about 200 ms. If no "completed" reply comes from this apparatus within about 200 ms, the upper-layer apparatus sends a connection request to this apparatus, captures data, and sends an end command to this apparatus.

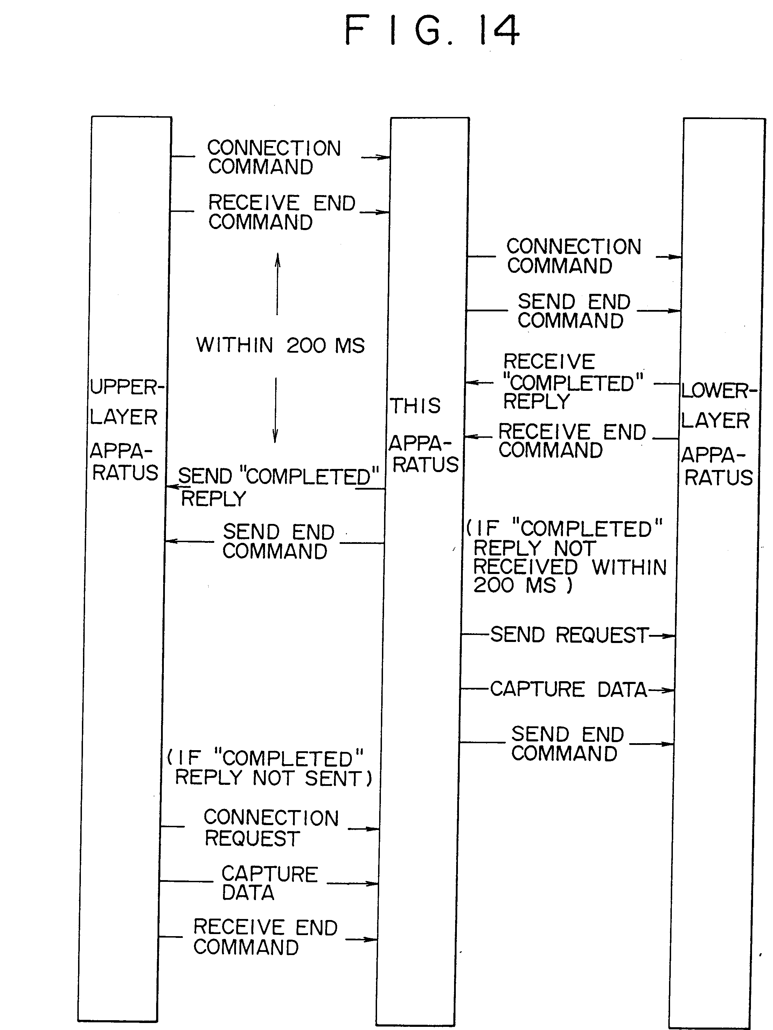

Fig. 14 shows an example of connection processing in a stretching mode in the embodiment of Fig. 1. "Stretching" is a command issued from the upper-layer apparatus to a lower-layer apparatus via this apparatus. Receiving a connection command and then an end command from the upper-layer apparatus, this apparatus passes the commands to the lower-layer apparatus. Receiving the connection command and the end command, the lower-layer apparatus normally sends a "completed" reply and an end command to this apparatus. Generally within about 200 ms after receiving the end command from the upper-layer apparatus, this apparatus sends a "completed" reply and an end command to the upper-layer apparatus.

If this apparatus does not receive a "completed" reply from the lower-layer apparatus generally within about 200 ms after sending an end command to the lower-layer apparatus, this apparatus sends a connection request to the lower-layer apparatus, captures data, and sends an end command to the lower-layer apparatus.

If the upper-layer apparatus does not receive a "completed" signal from this apparatus, the upper-layer apparatus sends a connection request to this apparatus, captures data, and sends an end command to this apparatus.

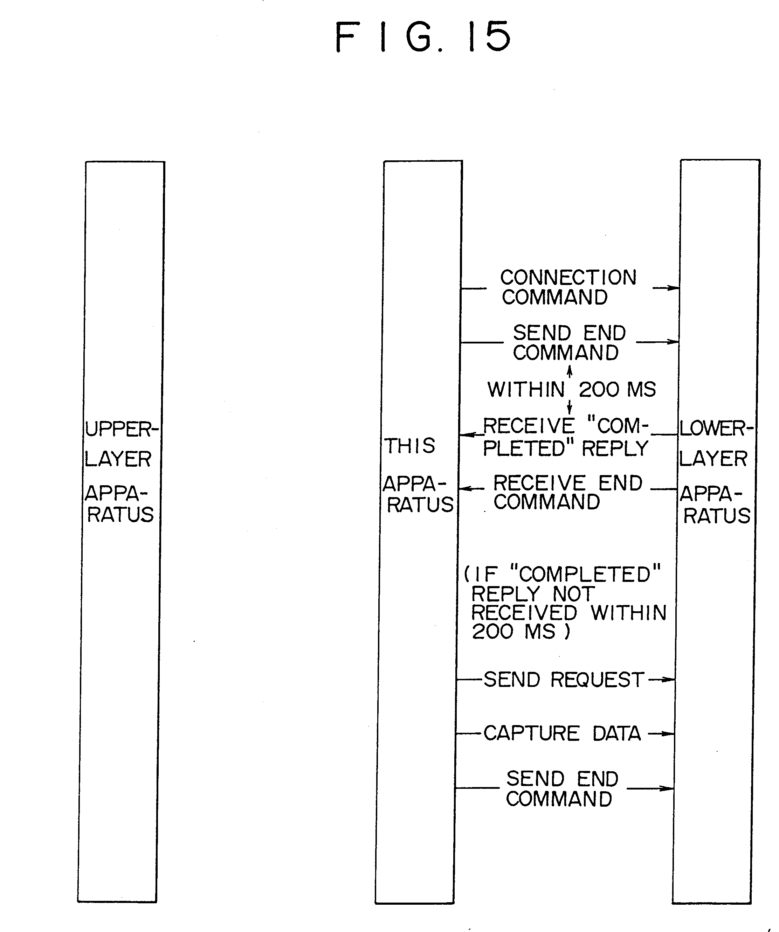

Fig. 15 shows an example of connection processing to be performed when a connection command has been issued from this apparatus (the first VTR 30 for example) to a lower-layer apparatus (the second VTR 40 for example) in the embodiment of Fig. 1. Having sent a connection command and an end command to the lower-layer apparatus, this apparatus receives a "completed" reply indicating that the connection has been completed and an end command from the lower-layer apparatus generally within about 200 ms. If no "completed" reply comes from the lower-layer apparatus generally within about 200 ms, this apparatus sends a connection request to the lower-layer apparatus, captures data, and sends an end command to the lower-layer apparatus.

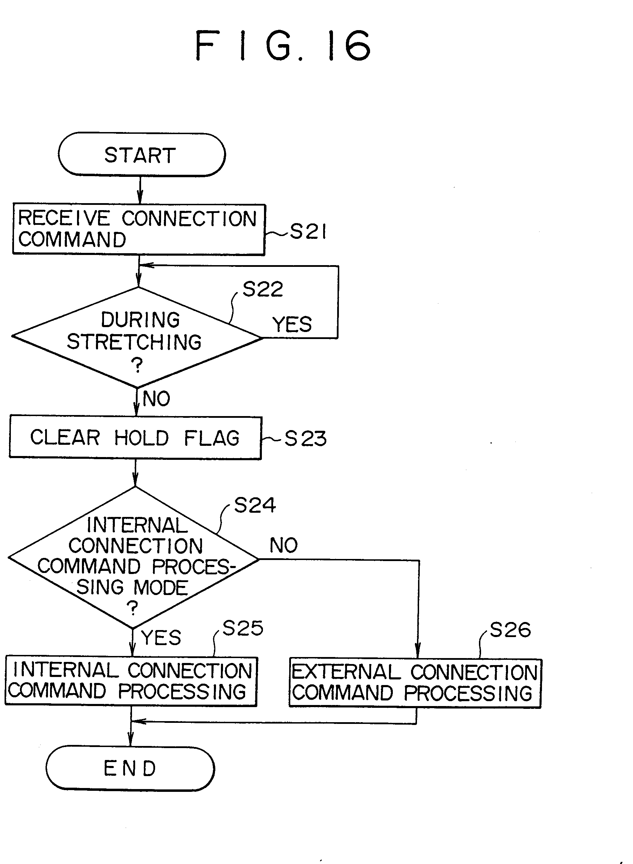

Fig. 16 shows processing to be performed when, in the embodiment of Fig. 1, this apparatus (the first VTR 30, the second VTR 40 or the LDP 50 for example) connected to the AV center 100 via the D2B bus 21 has received a connection command. If, having received the connection command (step S21 of Fig. 16), this apparatus is not in the stretching mode, it clears a hold flag to suspend holding of reply data (step S23). Then, if in an internal connection command processing mode, this apparatus performs internal connection command processing (step S25); otherwise, this apparatus performs external connection command processing.

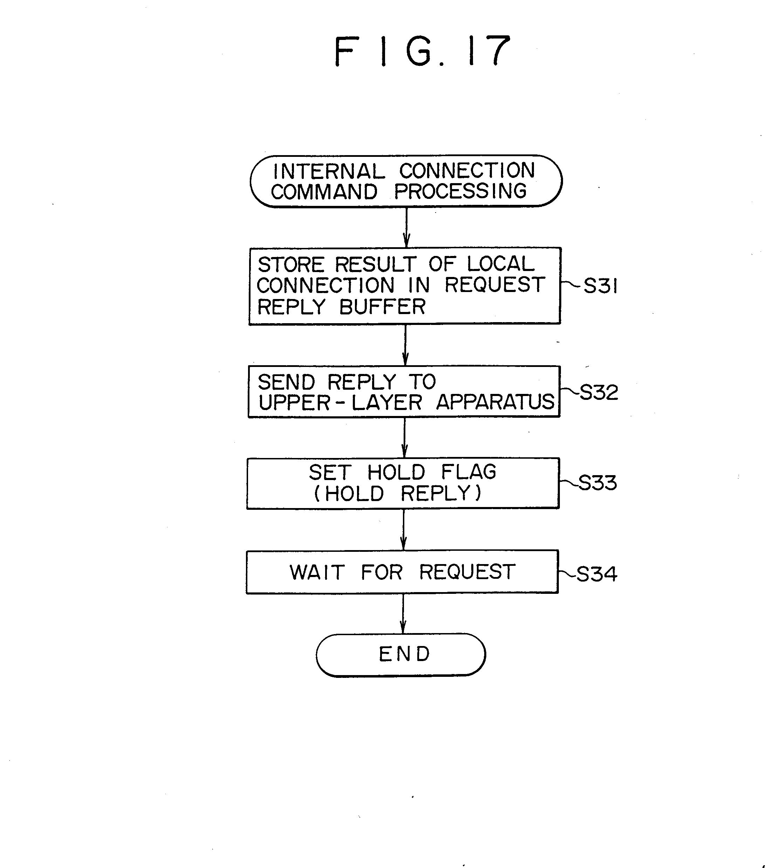

Fig. 17 shows an example of the internal connection command processing. In this processing, this apparatus stores a result of local connection processing in a request reply buffer (step S31). Then,, this apparatus sends a reply to an upper-layer apparatus (step S32), sets the hold flag to hold the reply (step S32), and waits for a request (step S34).

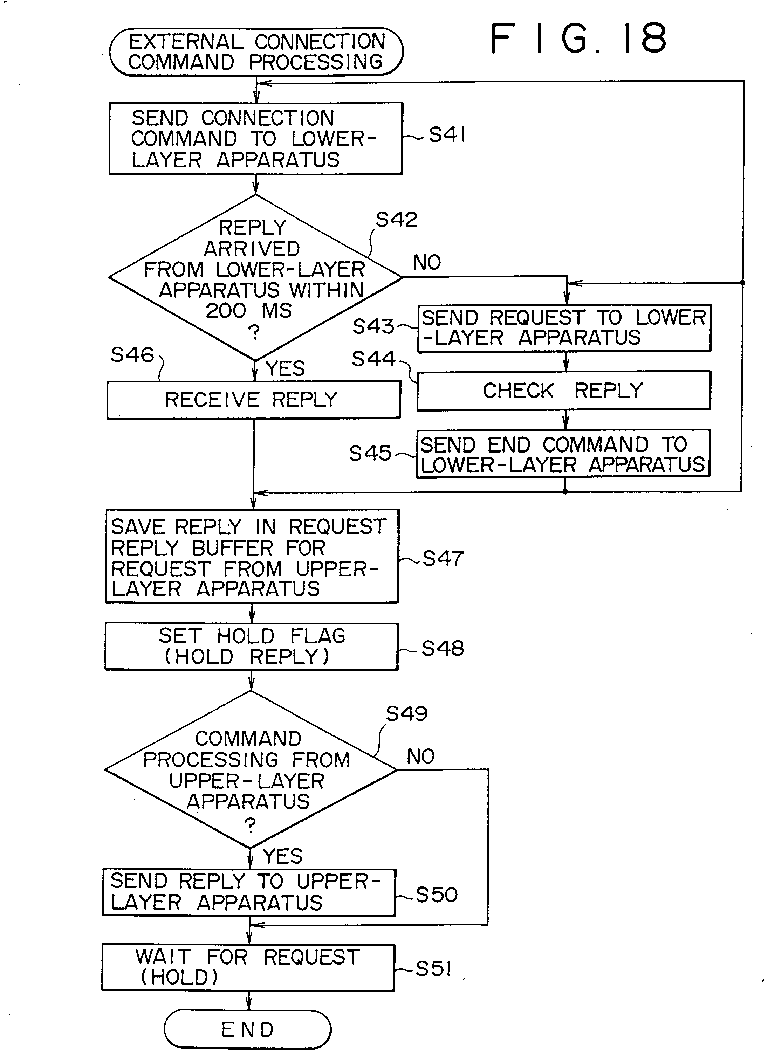

Fig. 18 shows an example of the external connection command processing shown in Fig. 16. In this processing, this apparatus first sends a connection command to a lower-layer apparatus (step S41). Then, if no reply comes from the lower-layer apparatus within about 200 ms (NO of step S42), this apparatus sends a request to the lower-layer apparatus (step S43), checks a reply from the lower-layer apparatus (step S44), sends an end command to the lower-layer apparatus (step S45), and depending on a content of the checked reply, executes step S41 or S43 or goes to step S47.

If this apparatus receives a reply from the lower-layer apparatus within about 200 ms after sending the connection command to the lower-layer apparatus (YES of step S42, and step S46), this apparatus stores the reply in a request reply buffer for a request from the upper-layer apparatus (step S47). Then, this apparatus sets the hold flag to hold the reply (step S48) and, if the processing is the command processing from the upper-layer apparatus (YES of step S49), sends a reply to the upper-layer apparatus to wait for a request (step S51). If the processing is not the command processing from the upper-layer apparatus (NO of step 49), this apparatus waits for a request (step S51).

Since the connection processing shown in Figs. 13 through 18 is complicated as mentioned above, a heavy load is imposed on a CPU or microcomputer program. In other words, when processing a connection command issued from the upper-layer apparatus to the lower-layer apparatus via this apparatus, this apparatus knows a state of only the immediately adjacent lower-layer apparatus; this apparatus does not know a final destination of a connection command issued by it. The final destination may be the immediately adjacent lower-layer apparatus or an apparatus connected to it further downstream. Consequently, in a feature making use of an entire resource, a program is complicated by factors such as enquiry and connection command stretching.

To improve the above-mentioned problem of the complicated program, a system configuration is based on a star-type network in which a center controls functions, states and connections of all equipment units constituting the system. In this configuration, the center sends a connection command for example to each of the equipment units and each of the equipment units may only control itself.

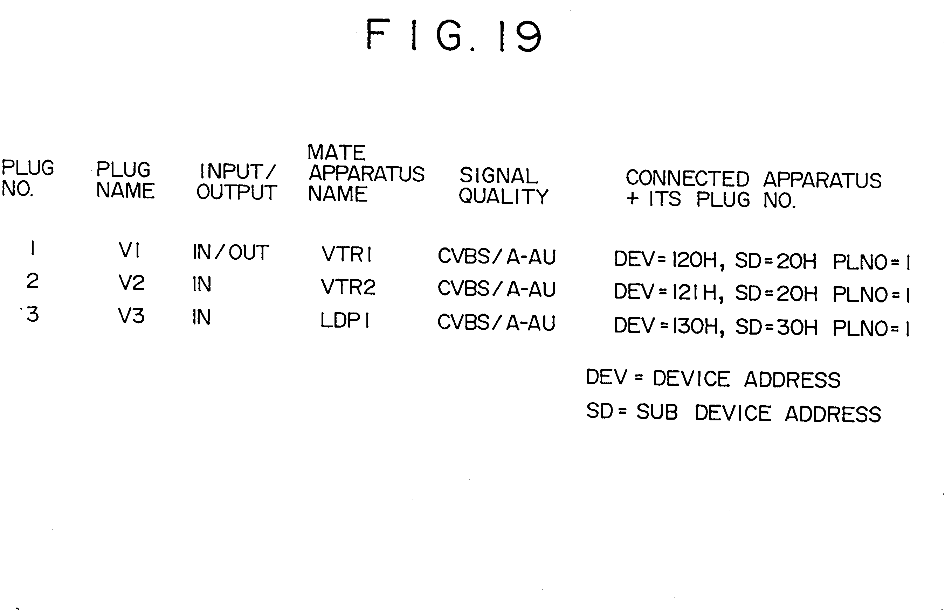

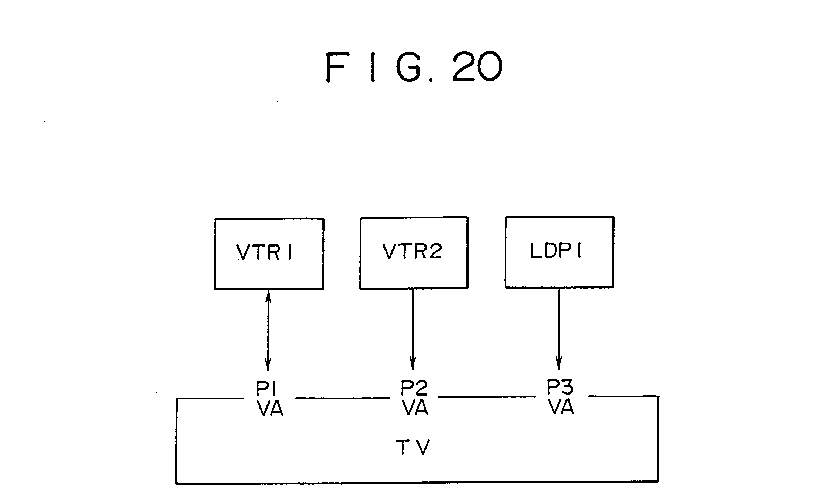

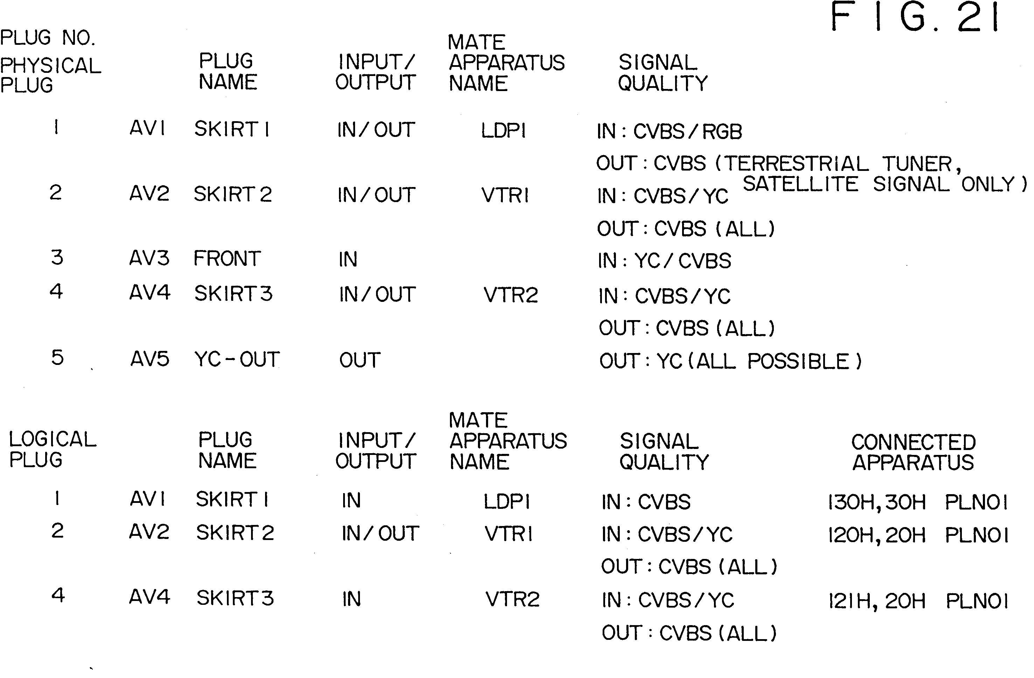

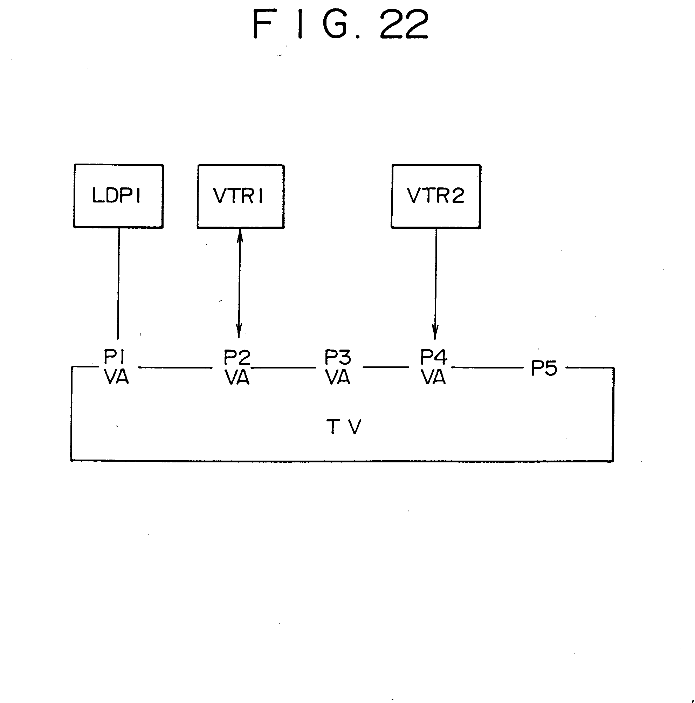

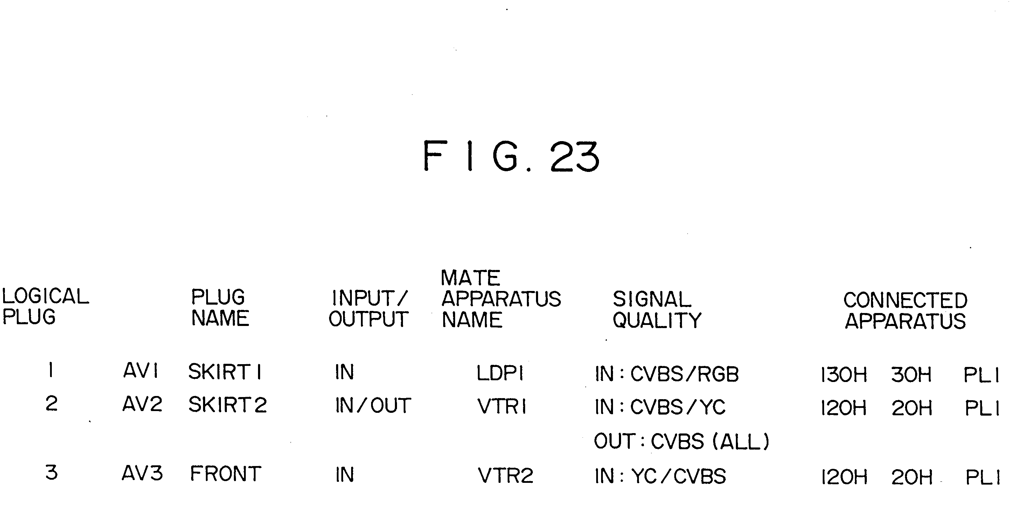

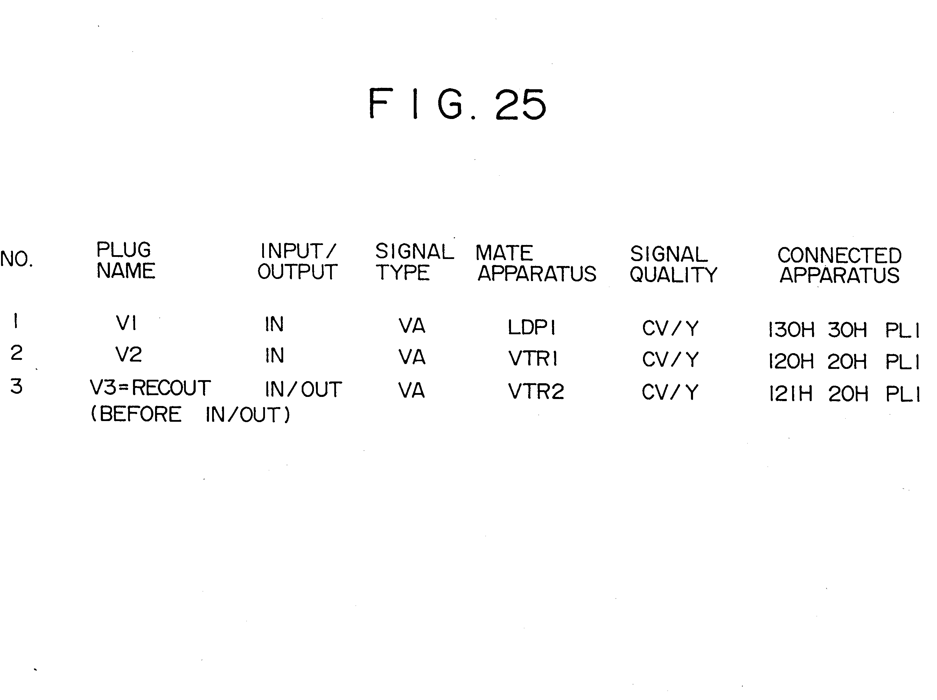

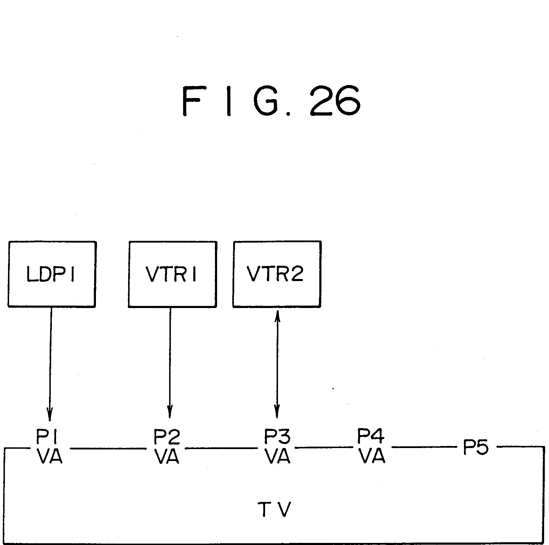

To simplify the program of the D2B communication processing CPU or microcomputer still further, a state of connection from an external plug of a television receiver (an AV center) is preset as shown in Figs. 19, 21, 23 and 25 instead of generalizing the state. In an example of presetting the connection state shown in Fig. 19, VTR1, VTR2, and LDP1 are limitedly connected to TV plugs P1, P2, and P3 respectively as shown in Fig. 20 (the plug P 1 transmits an AV signal bidirectionally). In an example of presetting the connection state shown in Fig. 21, LDP1, VTR1 and VTR2 are limitedly connected to TV plugs P1, P2 and P4 respectively as shown in Fig. 22 (the plug P2 transmits an AV signal bidirectionally). In an example of presetting the connection state shown in Fig. 23, LDP1, VTR1 and VTR2 are limitedly connected to TV plugs P1, P2 and P3 respectively as shown in 24 (the plug P2 transmits an AV signal bidirectionally). In an example of presetting the connection shown in Fig. 25, LDP1, VTR1 and VTR2 are limitedly connected to TV plugs P1, P2 and P3 respectively as shown in Fig. 26 (the plug P3 transmits an AV signal bidirectionally).

Thus, presetting the external plug connection decreases an amount of information to be set by user, in turn decreasing a storage capacity of the non-volatile memory 7 in which connection information is stored. Alternatively, the non-volatile memory 7 itself can be removed.

When the center manages the resources of all equipment units and the feature execution as mentioned above, the center can actually grasp all system states, thereby eliminating the need for both pass protection and equipment protection.

To provide compatibility between the complicated protocol and the simplified protocol mentioned above, a version of a mate apparatus is inquired by a D2B command at setting a system configuration.

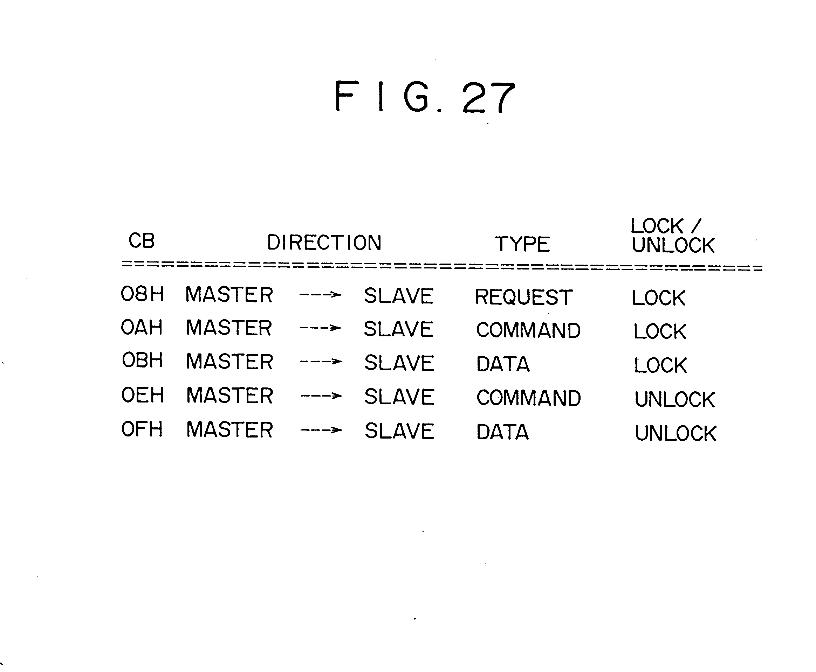

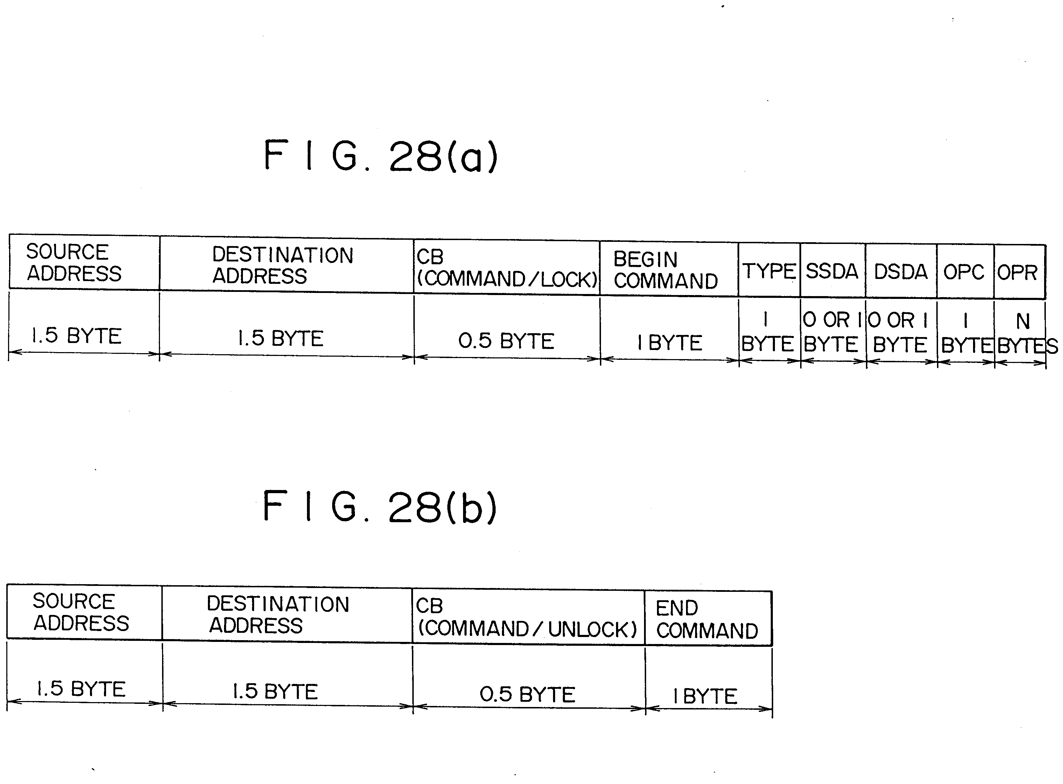

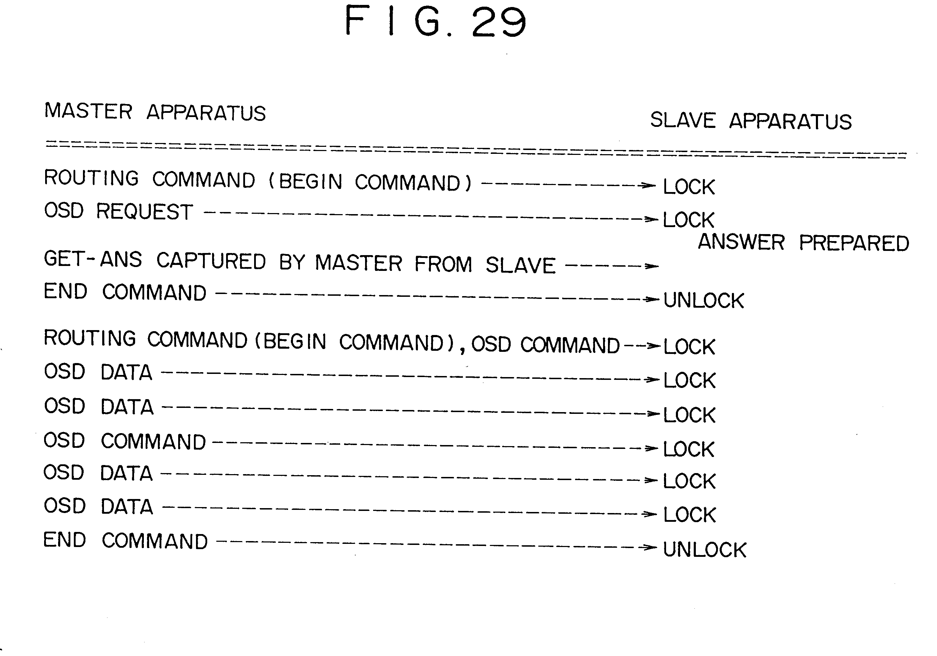

Fig. 27 shows main types of a control bit (CB) of a conventional D2B protocol. In the D2B protocol, any apparatus may be master or slave. In Fig. 27, "lock" means that, when a master apparatus and a slave apparatus communicate each other, the master apparatus sends a lock command to the slave apparatus to lock it against communication from any other apparatus than the master. The CB consists of four bits. Depending on a CB type, locking or unlocking is instructed. Fig. 28 shows a message format of the conventional D2B protocol. Fig. 29 shows a transfer sequence associated with an OSD command of the conventional D2B protocol. If an apparatus locks a mate apparatus, the locking apparatus must always issue an unlock command to the locked apparatus. Conventionally, a command is sent in the lock mode to a mate apparatus and then an end command is sent in another frame for unlocking it, making the communication data long.

According to this invention, the protocol of Fig. 29 is not used; that is, the communication is performed always in the unlocked state instead of the locked state, decreasing an amount of data that flows through a bus line to simplify the processing of the microcomputer software program.

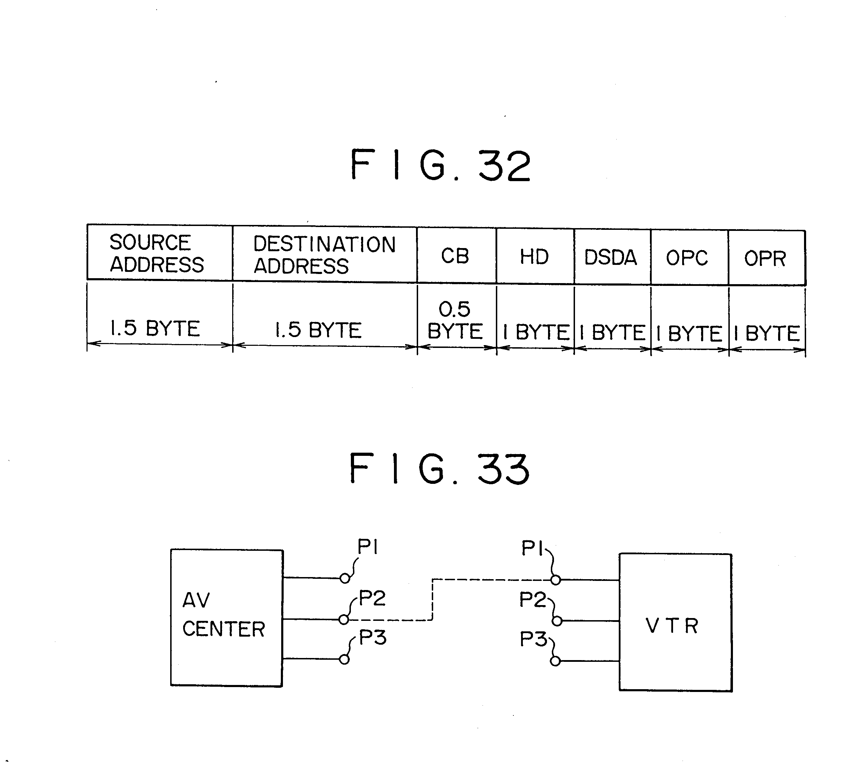

In the conventional D2B protocol, routing information (a source address and a destination address) is sent in a first frame as shown in Fig. 31. Since the routing information is located in a beginning of a message but not in any of subsequent frames, it is necessary for the microcomputer program to discriminate between frames having and not having the routing information, making the processing complicated. That is, conventionally, an uncertain length of the routine information must be processed because of a routing control instruction (BEGIN2 command = BDH ...) and data associated with a first portion of communication data, or source and destination addresses must be processed in a upper-layer, making a processing architecture complicated. According to this invention, use of the above-mentioned routing control instruction is abolished; instead, an instruction system is formed in a frame format of a fixed length to simplify microcomputer processing.

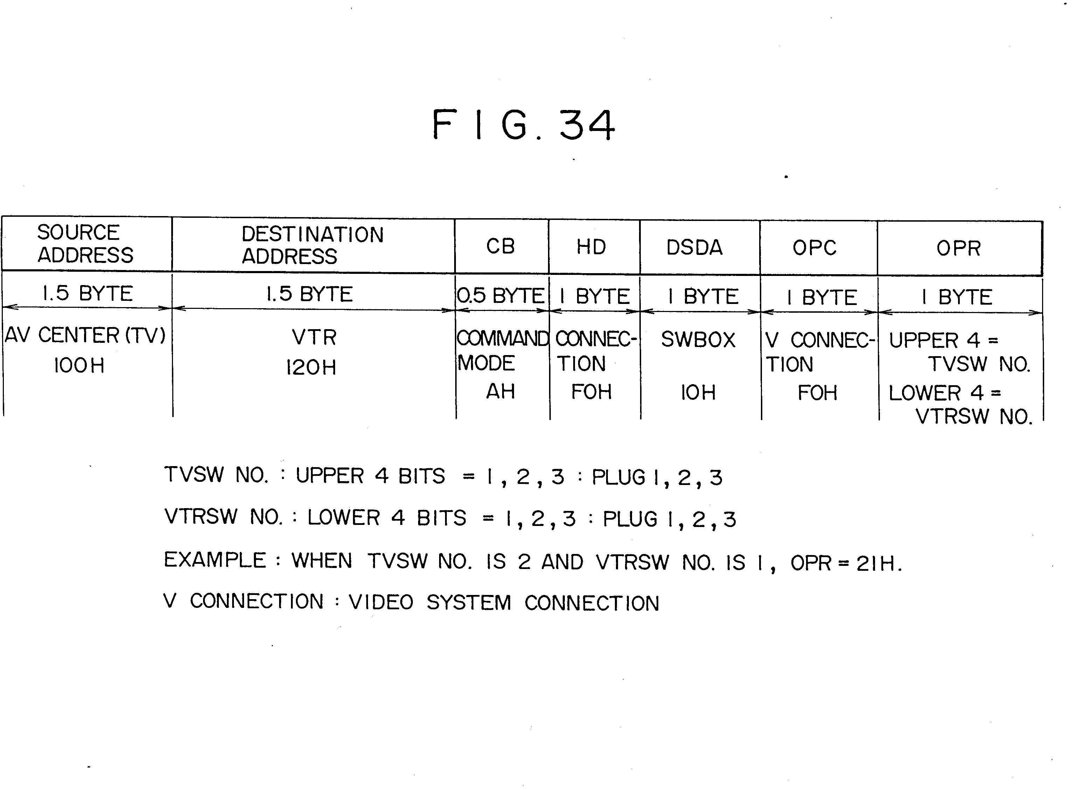

Conventionally, since a connection command and an unprotect instruction occupy a large portion of a D2B protocol specification, their centralized management causes processing of the connection command and processing of the protection of a connection system to complicate the microcomputer software program. Therefore, according to this invention, the conventional connection command and unprotect instruction are replaced with a simplified connection instruction. That is, a connection command for connecting from a plug 2 of a switch box of the AV center to a plug 1 of the VTR as shown in Fig. 33 for example is provided with a code specification as shown in Fig. 34 for example.

It will be apparent that changing the conventional n-byte operand of an uncertain length shown in Fig. 28 to a one-byte fixed length operand as shown in Figs. 32 and 34 simplifies the program.

In order to provide a downward compatibility, the following scheme may be employed. That is, a command REQ is prepared for controlling a command level between the conventional D2B command specification and the apparatus in the simplified command system according to this invention. It should be noted that, as mentioned above, this REQ processing is not made in the D2B specification according to this invention. To be specific, an apparatus of the conventional specification inquires a level of a mate apparatus by means of REQ transmission. If the mate apparatus is an apparatus having the conventional full D2B specification, the mate specification prepares a sequence specification for answering the inquiry about the level. If the mate apparatus is an apparatus having the specification according to this invention, the mate apparatus does not answer the inquiry about the level. Thus, the mate apparatus can be determined whether it is based on the conventional specification or the simplified specification according to this invention. If any of apparatuses in a system is found to be based on the simplified specification according to this invention, all apparatuses based on the conventional specification must adapt to the apparatus of the simplified specification.

In a transmission data format of Fig. 32, when a beginning of upper-layer data (HD, DSDA, OPC and OPR) is HD = FEH, the OPC and OPR (number of pieces of data) may be made a transparent-mode command. Subsequently, data in which CB = 0BH (data mode) is transparent data.

To send a command to all devices, upper four bits of each destination address are set to 8H. To send a command to devices in a specific group (a maximum number of VTRs in a group is 8 for example), upper four bits of each destination address are set to 9H. Thus, when an address 920H is sent, a command can be broadcast to devices 120H through 127 H.

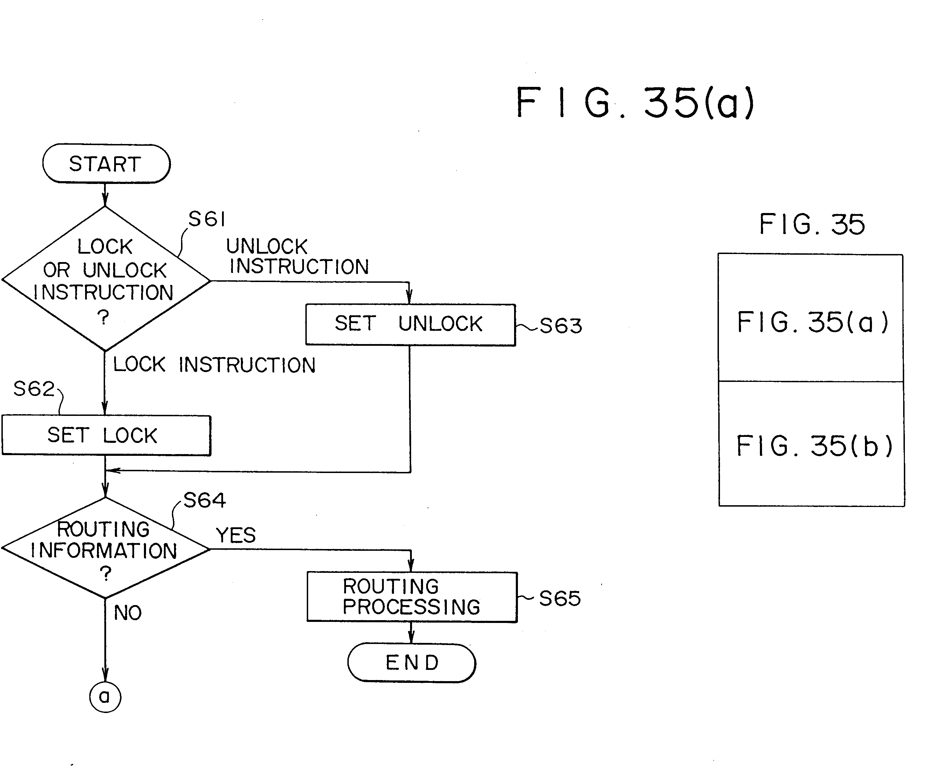

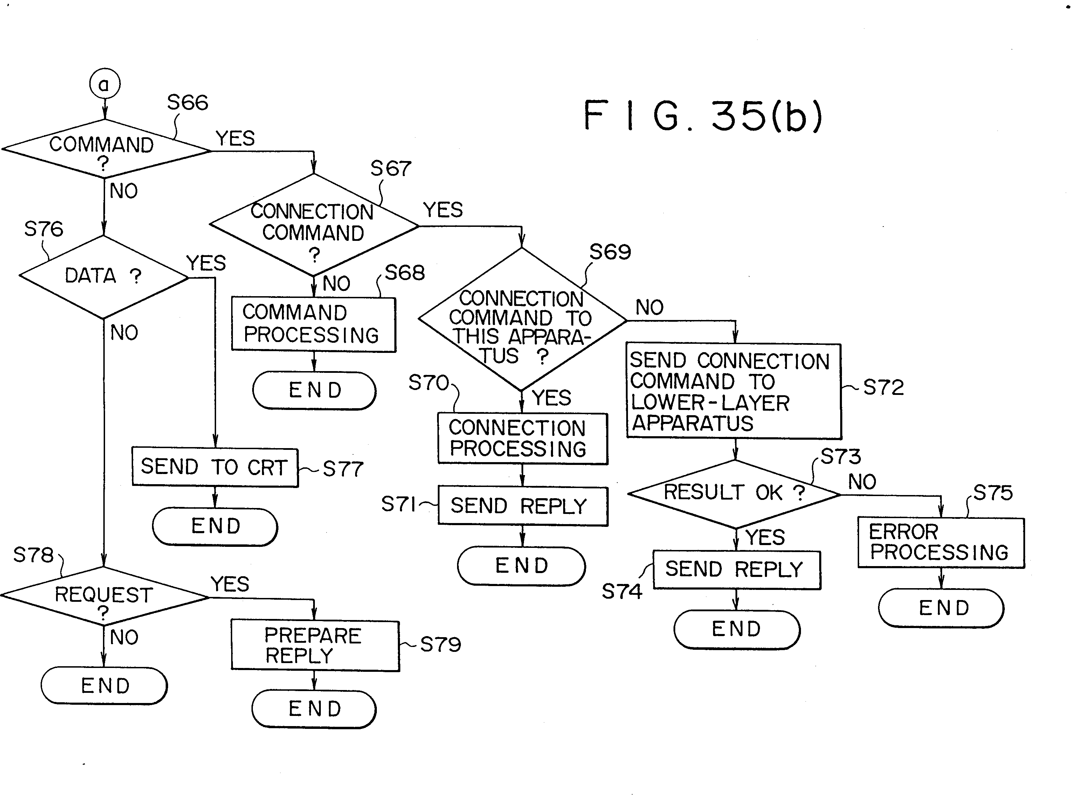

Fig. 35 shows a flowchart describing received data processing based on the conventional D2B protocol. First, discrimination is made between a locking instruction and an unlocking instruction (step S61). If the instruction is found to be a locking instruction, locking is set (step S62); if it is found to be an unlockinging instruction, unlocking is set (step S63).

When routing information is received (YES of step S64), routing processing is performed.

When a command (CMD) is received (YES of step S66), it is determined whether the received command is a connection command or not (step S67). If the received command is not a connection command, a general command processing is performed (step S68). If it is a communication command, it is determined whether the communication command is for connection to this apparatus (step S69). If the connection command is for connection to this apparatus, connection processing is performed accordingly (step S70) and a reply is sent (step S71).

If the connection is not for connection to this apparatus, a connection command to a lower-layer apparatus is sent (step S72). If a result of the processing is normal (YES of step S73), a reply is sent (step S74); if the result is abnormal (NO of step S73), error processing is performed (step S75).

Thus, the conventional received data processing is relatively complicated.

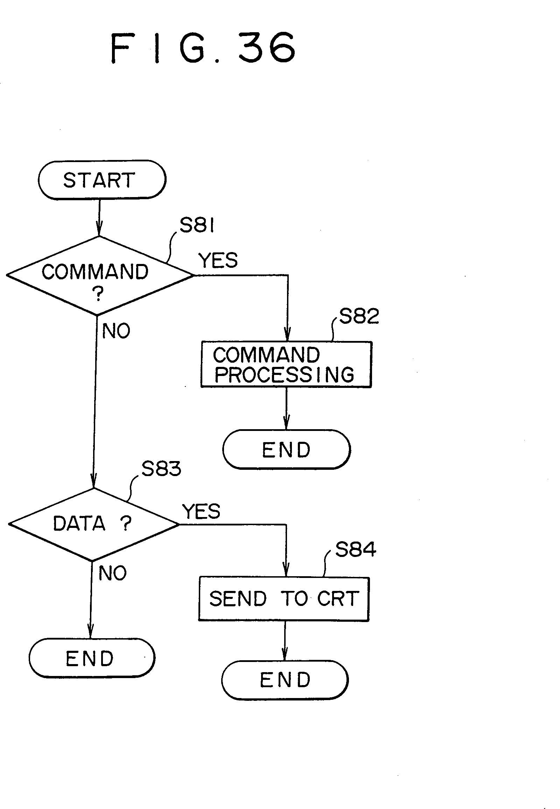

Fig. 36 shows a flowchart describing an example of received data processing based on the simplified command system according to this invention. When a command is received (YES of step S81), command processing is performed; when data (OSD data) is received (YES of step S83), the data is transferred to the CRT (step S84). Thus, the simplified command system according to this invention simplifies the processing, mitigating the otherwise heavy software load.

In the first communication apparatus according to this invention, received data of different types are stored in respective buffers, so that the received data need not be read out immediately but may be read only when required, thereby eliminating use of high-speed processing apparatus. Additionally, received data need not be sorted after being read from the buffers, thereby simplifying the processing of the system.

In the first communication method according to this invention, if a command and a request have the same operand, the operand of the request is not sent, thereby reducing an amount of data to be transmitted.

In the second communication method according to this invention, communication is always performed in the unlocked state, so that no unlocking instruction is required to change states from lock to unlock, thereby further reducing an amount of data to be transmitted.

While the preferred embodiment of the invention has been described using specific terms, such description is for illustrative purpose only, and it is to be understood that changes and variations may be made without departing from the scope of the appended claims.

## Claims

1. A method of communication between a plurality of equipment units comprising the steps of:
detecting whether a header exists;
detecting whether a command exists;
detecting whether data exists; and
detecting whether a request exists.

2. A method of communication between a plurality of equipment units as claimed in claim 1 further comprising the steps of:
if a header exists, storing said header in a header buffer;
if a command exists, storing said command in a command buffer;
if data exists, storing said data in a data buffer; and
if a request exists, storing said request in a request buffer.

3. A method of communication between a plurality of equipment units comprising the step of:
sending a command from a first apparatus to a second apparatus; and
returning from said second apparatus to said first apparatus a signal indicating one of acknowledgement and non-acknowledgement of said command without making a request by said first apparatus to said second apparatus.

4. A method of communication between a plurality of equipment units as claimed in claim 3 wherein:
a return time of said return signal is restricted to a predetermined time by said first apparatus and, if said first apparatus does not receive said return signal from said second apparatus within said predetermined period of time, said first apparatus requests said second apparatus for data.

5. A method of communication between a plurality of equipment units as claimed in claim 4 wherein:
said predetermined time is about 200 ms.

6. A method of communication between a plurality of equipment units as claimed in claim 4 or 5 further comprising the steps of:
after sending said command by said first apparatus, sending by said second apparatus a command to a third apparatus and returning from said third apparatus to said second apparatus a signal indicating one of acknowledgement and non-acknowledgement of said command without making a request by said second apparatus to said third apparatus;
restricting by said second apparatus a return time of said return signal to a second predetermined time; and
if said second apparatus does not receive said return signal from said third apparatus within said second predetermined time, requesting said third apparatus by said second apparatus for data.

7. A method of communication between a plurality of equipment units as claimed in claim 6 wherein:
said predetermined time and said second predetermined are generally the same in period.

8. A method of communication between a plurality of equipment units as claimed in claim 4, 5, 6 or 7 wherein said second apparatus performing a process comprising the steps of:
entering a mode of connecting to an outer apparatus;
sending a connection command to a lower-layer apparatus;
if the return signal is sent from said lower-layer apparatus within said predetermined time, receiving said return signal;
if the return signal is not sent from said lower-layer apparatus within said predetermined time, requesting said lower-layer apparatus for the return signal;
saving data from said lower-layer apparatus in a request buffer;
setting a hold flag;
sending the data from said request buffer to an upper-layer apparatus; and
waiting for a request signal from said upper-layer apparatus.

9. A method of communication between a plurality of equipment units as claimed in any one of claims 3 to 8 wherein:
preset data about connection between apparatuses in a system is read before starting communication.

10. A method of communication between a plurality of equipment units as claimed in any one of claims 3 to 9 wherein:
said communication is performed by unlocking a data bus at transferring one of said command and data.

11. A method of communication between a plurality of equipment units as claimed in any one of claims 3 to 10 wherein:
said command comprises an operation code and an operand, said operand having a predetermined length.

12. A method of communication between a plurality of equipment units as claimed in claim 11 wherein:
said predetermined length is one byte.

13. A method of communication between a plurality of equipment units as claimed in any one of claims 3 to 12 wherein:
said command comprises a source address code and a destination address code; and
if predetermined bits of said destination address code are set to a predetermined value, a broadcast mode is set.

14. A method of communication between a plurality of equipment units as claimed in claim 13 wherein:
said predetermined bits are upper four bits.

15. A method of processing a received signal comprising the steps of:
if said received signal is a command, processing said command; and
if said received signal is data, sending said data to a display device.

16. An apparatus for communication between a plurality of equipment units comprising:
an inner bus for connecting a plurality of components of said apparatus;
a main controller connected to said inner bus;
an outer bus for connecting said apparatus to an external apparatus;
a processing unit for communication with said external apparatus;
a sub controller connected to said inner bus to control said processing unit;
a memory for storing any of a command and data for any of operations including control of said apparatus and communication therewith; and
a selector connected to said inner bus to switch between a plurality of information signals.

17. An apparatus for communication between a plurality of equipment units as claimed in claim 16 further comprising:
an infrared sensor for receiving an infrared signal coming from a remote controller;
an interface for connecting said infrared sensor with said inner bus; and
a display unit connected to said selector to displaying data.

18. An apparatus for communication between a plurality of equipment units as claimed in claim 16 or 17 wherein said memory comprising:
a random access memory for temporarily storing any of a command and data;
a read-only memory for permanently storing any of a command and preset data; and
a non-volatile memory for temporarily storing a command and data which are kept stored even after a power to said non-volatile memory is turned off.

19. An apparatus for communication between a plurality of equipment units as claimed in claim 16, 17 or 18 wherein:
said sub controller performs any of operations including sending and receiving packet data having a plurality of frames, said frames comprising a header command, data, and an end command.

20. An apparatus for communication between a plurality of equipment units as claimed in claim 16, 17 or 18 wherein:
said sub controller performs any of operations including sending and receiving packet data having a plurality of frames, said frames comprising a request and an end command.

21. An apparatus for communication between a plurality of equipment units as claimed in claim 19 wherein:
said data is on-screen-display data.

22. An apparatus for communication between a plurality of equipment units as claimed in any one of claims 16 to 21 wherein:
said sub controller sends a command to another apparatus and receives one of an acknowledge signal and a non-acknowledge signal as a return signal for said command from said another apparatus without requesting said another apparatus for said signal.

23. An apparatus for communication between a plurality of equipment units as claimed in claim 22 wherein:
said sub controller restricts a return period of said return signal to a predetermined time; and
if said sub controller does not receive said return signal from said another apparatus within said predetermined time, said sub controller requests said another apparatus for data.

24. An apparatus for communication between a plurality of equipment units as claimed in claim 23 wherein:
said predetermined time is about 200 ms.

25. An apparatus for communication between a plurality of equipment units as claimed in claim 18 wherein:
said non-volatile memory stores a system configuration of a particular type of preset connection between a plurality of apparatuses.

26. An apparatus for communication between a plurality of equipment units as claimed in any one of claims 16 to 25 wherein:
said sub controller performs any of operations including sending and receiving a command, said command comprising an operation code and an operand, said operand having a predetermined length.

27. An apparatus for communication between a plurality of equipment units as claimed in claim 26 wherein:
said predetermined length is one byte.

28. An apparatus for communication between a plurality of equipment units as claimed in any one of claims 16 to 27 wherein:
said sub controller performs any of operations including sending and receiving a command, said command comprising a source address code and a destination address code; and
if predetermined bits of said destination address code are set to a predetermined value, a broadcast mode is set.
